# DEMANDE DE BREVET EUROPEEN

(11) **EP 1 544 693 A1**
(43) Date de publication de la demande: **22.06.2005**
(21) Numéro de dépôt: 03029393.0
(22) Date de dépôt: 19.12.2003
(51) Int. Cl.: G04C 13/11, H02K 37/16

(54) **Moteur pas à pas monophase pour un mécanisme du type horloger**

(71) Demandeur: ETA SA Manufacture Horlogère Suisse, 2540 Grenchen (CH)
(72) Inventeur: Taghezout, Daho, 1110 Morges (CH)
(74) Mandataire: Surmely, Gérard

(57) **Abrégé**

L'invention concerne un moteur pas à pas monophasé de petites dimensions, notamment destiné à entraîner un mécanisme du type horloger. Son stator (32) est constitué par une seule et même pièce (28) en matériau à haute perméabilité magnétique ayant une forme générale en U. Cette dernière pièce est formée de deux branches (10,12) sensiblement parallèles et reliées à leur première extrémité par une partie de liaison (18). L'ouverture statorique (22) pour le rotor (4) est prévue dans la région des deuxièmes extrémités respectives des deux branches de la pièce statorique (28). L'ouverture statorique est agencée de manière à définir une ouverture (26) d'introduction de la bobine (24) avant le montage du rotor. Ainsi, la bobine peut être préformée et montée directement sur la seule et même pièce statorique (28). Dans un mode de réalisation préféré, l'ouverture statorique (22) est définie par deux évidements latéraux (20a,20b) usinés dans les deux branches du stator, ces deux évidements latéraux présentant un profil général circulaire dont le centre géométrique est décalé relativement à l'axe géométrique (40) du rotor. De plus, deux encoches de positionnement (36,38) sont agencées respectivement dans les deux évidements latéraux.

## Description

La présente invention concerne les moteurs pas à pas monophasés de petites dimensions destinés notamment à entraîner un mécanisme horloger. La plupart des mouvements électroniques horlogers, ayant un affichage analogique de l'heure, ont des aiguilles entraînées par un moteur horloger monophasé ou biphasé. L'homme du métier connaît le moteur pas à pas monophasé du type Lavet formé d'un stator plat portant une bobine d'alimentation et ayant un rotor muni d'un aimant permanent bipolaire à aimantation radiale, c'est-à-dire selon une direction perpendiculaire à l'axe géométrique de rotation du rotor. Cet aimant permanent est agencé dans une ouverture du stator définissant deux pôles magnétiques. Le stator d'un moteur Lavet typique est formé de deux pièces en matériaux ferro-magnétiques à haute perméabilité, la première pièce présentant le trou statorique et la deuxième pièce formant un noyau pour la bobine. En général, les deux extrémités du noyau de bobine sont fixées sur la première pièce statorique à l'aide de vis. Pour ce faire, les deux extrémités du noyau de bobine présentent un élargissement relativement à la partie du noyau où la bobine est enroulée. Ce moteur Lavet, bien que de conception relativement simple, occasionne cependant un certain coût de fabrication. Le bobinage autour du noyau est une opération d'un certain coût. Ensuite, il s'agit d'assembler le noyau muni de la bobine avec le reste du stator. Cette dernière étape occasionne également un certain coût.

Le but de la présente invention est de fournir un moteur pas à pas monophasé, comprenant également un rotor à aimant permanent bipolaire, dont le coût de fabrication est peu onéreux.

A cet effet, la présente invention concerne un moteur pas à pas monophasé de petites dimensions, notamment destiné à entraîner un mécanisme du type horloger, comprenant un stator, un rotor à aimant permanent et une bobine d'alimentation. Le stator est constitué par une seule et même pièce en matériaux à haute perméabilité magnétique et ayant une forme générale en U, cette pièce étant formée de deux branches sensiblement parallèles ayant chacune une première extrémité et une deuxième extrémité. Ces deux branches sont reliées à leur première extrémité par une partie de liaison et présentent à leur deuxième extrémité respectivement un premier évidement latéral et un deuxième évidement latéral qui définissent ensemble une ouverture statorique pour le rotor, les deuxièmes extrémités définissant entre elles une ouverture d'introduction pour ladite bobine qui est montée sur une des deux branches du stator.

Grâce aux caractéristiques du moteur de l'invention, la bobine d'alimentation peut être préformée et montée simplement sur une des branches de la pièce unique formant le stator. On remarquera que le rotor est mis en place après l'agencement de la bobine. Le coût de fabrication du moteur de l'invention est donc réduit relativement à un moteur du type Lavet typique. De plus, l'encombrement du moteur de l'invention est inférieur à celui d'un tel moteur Lavet pour de mêmes performances. En particulier, le moteur est plat avec un stator dans un seul et même plan général.

Selon un mode de réalisation préféré de l'invention, le premier évidement latéral et le deuxième évidement latéral ont chacun, au moins partiellement, un profil général circulaire dont le centre géométrique est décalé relativement à l'axe de rotation du rotor selon une direction perpendiculaire à la direction longitudinale des deux branches du stator.

Le mode de réalisation préféré permet de diminuer fortement l'amplitude du couple de positionnement du rotor. De plus, il est prévu d'agencer deux encoches de positionnement respectivement dans les deux évidements latéraux des deux branches du stator, de manière à décaler angulairement la direction d'énergie minimale stable du rotor relativement à la direction du flux mutuel aimant-bobine. On a observé dans le cadre de la présente invention qu'un décalage angulaire d'environ 45° entre ladite direction d'énergie minimale du rotor et la direction du flux mutuel est obtenu en plaçant les encoches de positionnement selon une droite définissant un décalage angulaire, relativement à la direction du flux mutuel, différent de 45°, notamment d'environ 35°.

La présente invention sera décrite ci-après de manière plus détaillée à l'aide du dessin annexé, donné à titre d'exemples nullement limitatifs, dans lequel :
- les figures 1 et 2 sont respectivement une vue de dessus et en perspective d'un premier mode de réalisation général d'un moteur selon l'invention;
- la figure 3 est une vue de dessus d'un deuxième mode de réalisation préféré de l'invention;
- la figure 4 est une vue partielle agrandie du moteur de la figure 3, montrant la région de l'ouverture statorique; et
- la figure 5 montre le graphe du couple de positionnement du rotor en fonction de sa position angulaire, avec un courant d'alimentation nul.

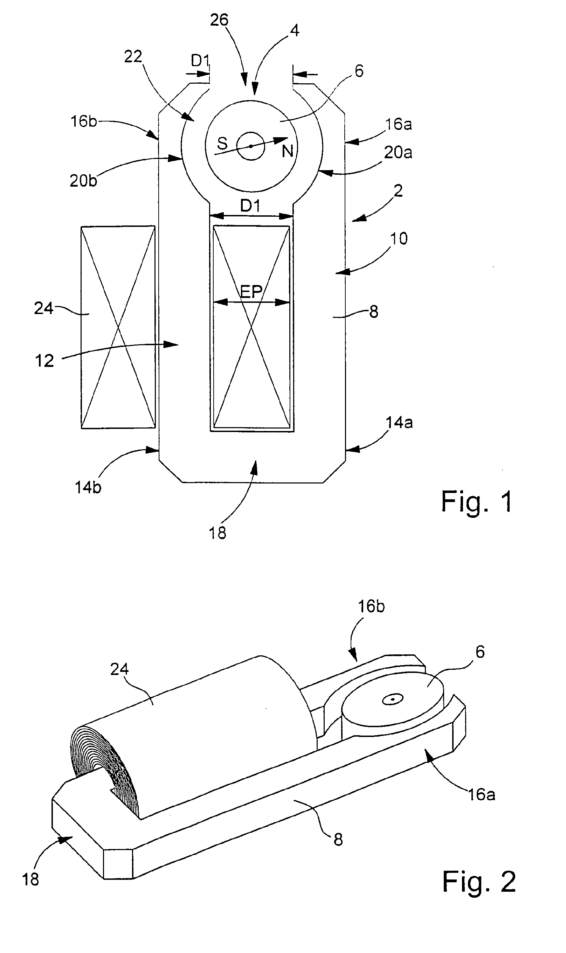

Les figures 1 et 2 représentent schématiquement un premier mode de réalisation général du moteur pas à pas selon l'invention. Ce moteur comprend un stator 2 et un rotor 4 muni d'un aimant permanent bipolaire à aimantation radiale 6. Le stator est constitué par une seule et même pièce 8, en matériau à haute perméabilité magnétique et faible champ coercitif, présentant la forme générale d'un U. Pour limiter les pertes par courant de Foucault, la pièce statorique 8 peut être de structure feuilletée. La pièce statorique 8 est formée de deux branches 10 et 12 sensiblement parallèles ayant chacune une première extrémité 14a, 14b et une deuxième extrémité 16a, 16b. Les deux branches 10 et 12 sont reliées à leur première extrémité par une partie de liaison 18 formant la base de la forme générale en U. Chacune des deux branches 10 et 12 présente à sa deuxième extrémité 16a, 16b un évidement latéral 20a, 20b. Ces deux évidements latéraux définissent ensemble une ouverture statorique 22 pour le rotor 4, l'aimant permanent 6 étant logé dans cette ouverture. Une bobine d'alimentation 24 est montée sur la branche 12 de la pièce statorique 8. Selon l'invention, les deux extrémités 16a et 16b de la pièce statorique 8 définissent entre elles une ouverture d'introduction 26 pour la bobine 24. En d'autres termes, les deux branches 10 et 12 présentent entre elles, dans la région de l'ouverture statorique 22, une distance D1 en tous points supérieure ou égale à l'épaisseur EP de l'anneau défini par une section transversale de cette bobine 24.

Ainsi, grâce aux caractéristiques de l'invention, la bobine 24 peut être préformée sans noyau et être introduite, avant le montage du rotor 4, le long d'une des deux branches de la pièce statorique 8 par l'ouverture d'introduction 26. Une fois la bobine 24 montée, le rotor 4 peut être monté par tous moyens connus de l'homme du métier. En particulier, le rotor peut être agencé dans une cage introduite dans l'ouverture statorique 22 ou être simplement agencé avec les deux extrémités de son arbre introduites dans deux paliers d'un mouvement horloger prévus à cet effet.

Le moteur selon l'invention, bien qu'ayant le stator en une seule pièce, présente une fente entre les deux pôles statoriques. Ceci permet d'avoir un flux mutuel aimant-bobine élevé. Ensuite, l'inductance de la bobine est relativement faible, ce qui réduit le temps de montée du courant électrique dans cette bobine et ainsi la consommation du moteur. De plus, le moteur possède un comportement sensiblement linéaire car l'effet de saturation du circuit magnétique statorique est relativement moindre. Ceci constitue notamment un avantage pour la détection de pas ratés par analyse du signal électrique dans la bobine après l'envoi des impulsions motrices.

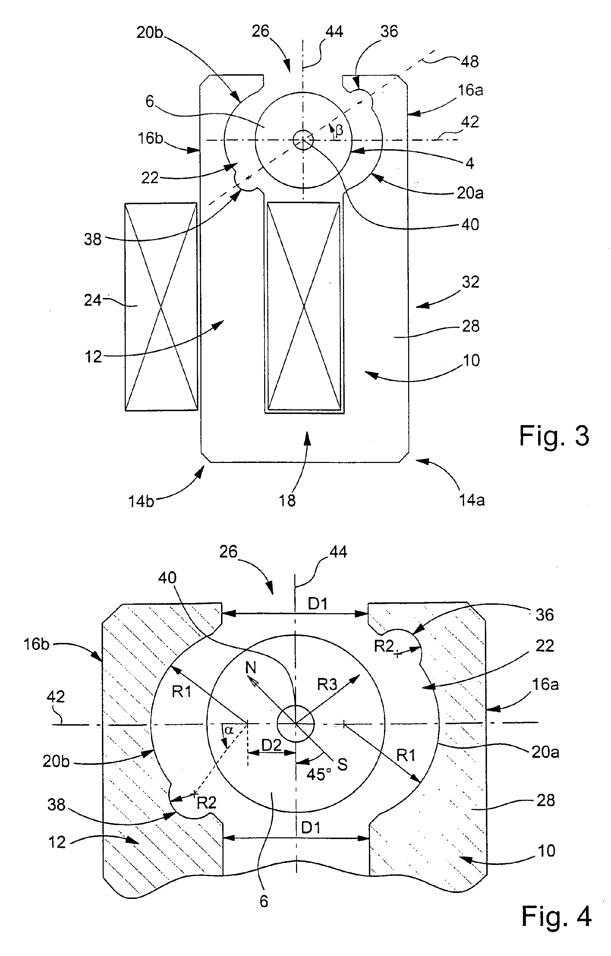

A l'aide des figures 3 et 4, on décrira ci-après un deuxième mode de réalisation préféré du moteur selon l'invention. Les références déjà décrites en détail dans le mode de réalisation général précédent ne seront pas à nouveau ici décrites toutes en détail.

Le stator 32 de ce mode de réalisation préféré est également formé par une seule et même pièce 28 en matériau à haute perméabilité magnétique et dont la forme générale est semblable à un U. Ce mode de réalisation préféré se distingue essentiellement du premier mode général par la forme du trou statorique 22 et par l'agencement de deux encoches de positionnement 36 et 38, respectivement, le long des deux évidements latéraux 20a et 20b.

Ce mode de réalisation préféré résout deux problèmes restant dans le mode de réalisation général décrit ci-avant. Premièrement, il permet de diminuer de manière très importante l'amplitude du couple réluctant, nommé aussi couple de positionnement, exercé sur l'aimant permanent 6. Une simulation informatique montre qu'il est possible de réduire ce couple de positionnement à une valeur inférieure à 0.3 µNm compatible avec l'entraînement d'un affichage analogique d'une montre électronique. Deuxièmement, le mode de réalisation préféré des figures 3 et 4 permet de déphaser de sensiblement 45° la direction d'aimantation de l'aimant bipolaire 6 relativement à la direction 42 perpendiculaire à l'axe géométrique 40 de rotation du rotor 4 dans le plan général de la pièce statorique 28. On notera que la direction 42 correspond à la direction principale du flux mutuel aimant-bobine du moteur décrit ici. La position d'énergie minimale stable de l'aimant permanent, nommée également position de repos, étant décalée angulairement relativement à la direction 42, un moment de force est exercé sur l'aimant 6 dès que la bobine 24 est alimentée électriquement. La commande électrique du moteur de l'invention est ainsi similaire à celle d'un moteur Lavet classique.

A l'aide de la figure 4, on décrira plus précisément les divers paramètres définissant le stator 32 dans la région de l'ouverture statorique 22. Les deux évidements latéraux 20a et 20b présentent toujours un profil général circulaire, mais dont le centre est décalé relativement à l'axe de rotation 40 du rotor selon la direction 42. La distance séparant le centre 40 de l'aimant permanent 6 et le centre géométrique du cercle défini par l'évidement latéral 20a, respectivement 20b, est désignée par D2 sur le dessin de la figure 4. Le rayon du cercle défini par chaque évidement latéral est désigné par R1. Les deux encoches de positionnement 36 et 38 présentent également un profil circulaire de rayon R2, le centre du rayon défini par chacune des encoches 36 et 38 étant situé sensiblement sur le cercle géométrique défini par l'évidement latéral correspondant 20a et 20b. L'aimant permanent circulaire 6 a un rayon R3. Les deux centres géométriques des deux encoches 36 et 38 définissent une droite 48 décalée angulairement d'un angle β relativement à la direction 42 du flux mutuel aimant-bobine (figure 3). Le décalage angulaire du centre géométrique de chacune des encoches relativement à la direction 42, mesurée depuis le centre géométrique du profil général circulaire de l'évidement latéral correspondant, est désigné par α.

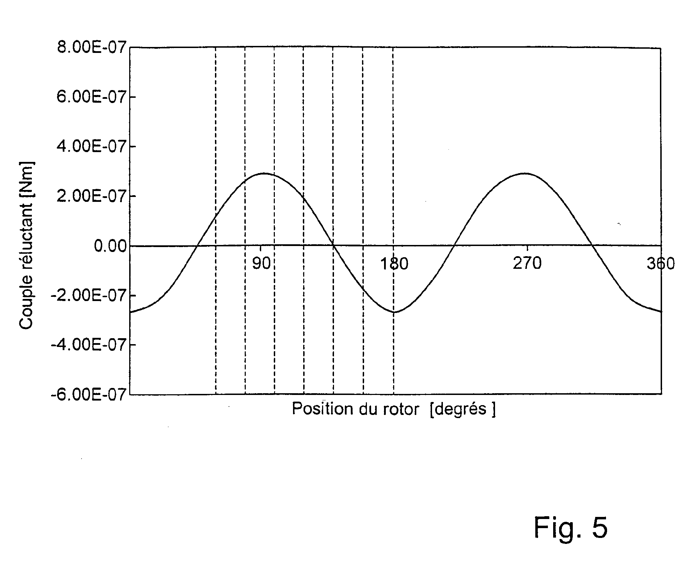

Dans une variante de réalisation particulière, la distance D2 est égale environ à ¾ du rayon R3 de l'aimant permanent 6. Ensuite, le rayon R1 du profil général des évidements latéraux a une valeur environ 10 % supérieure à celle du rayon R3 de l'aimant 6. A titre d'exemple nullement limitatif, les dimensions d'une variante de réalisation d'un moteur de l'invention sont données ci-après. Dans cette variante, le rayon R3 de l'aimant 6 est compris entre 0,6 et 0,65 mm. La hauteur de cet aimant est égale à 0,45 mm. La distance D2 est comprise entre 0,45 et 0,5 mm. Le rayon R1 est sensiblement égal à 0,7 mm, alors que le rayon R2 des encoches est sensiblement égal à 0,2 mm. La position d'énergie minimale de l'aimant bipolaire est décalée d'environ 45° relativement à la direction du flux mutuel 42. La distance D1 de l'ouverture d'introduction 26 est égale environ à 1 mm. L'angle α a une valeur d'environ 60°, alors que l'angle β a une valeur d'environ 35°. Sous ces conditions, le couple de positionnement est maintenu en dessous de 0,3 µNm. Le couple réluctant ou couple de positionnement du rotor en fonction de sa position angulaire, en l'absence d'alimentation de la bobine 24, est représenté à la figure 5.

## Revendications

1. Moteur pas à pas monophasé de petites dimensions comprenant un stator (2; 32), un rotor (4) à aimant permanent (6) et une bobine (24), **caractérisé en ce que** ledit stator est constitué par une seule et même pièce (8; 28) en matériau à haute perméabilité magnétique et ayant une forme générale en U, cette pièce étant formée de deux branches (10, 12) sensiblement parallèles et ayant chacune une première extrémité (14a, 14b) et une deuxième extrémité (16a, 16b), ces deux branches étant reliées à leur première extrémité par une partie de liaison (18) et présentant à leur deuxième extrémité respectivement un premier évidement latéral (20a) et un deuxième évidement latéral (20b) qui définissent ensemble une ouverture statorique (22) pour ledit rotor, les deuxièmes extrémités définissant entre elles une ouverture d'introduction (26) pour ladite bobine qui est montée sur une des deux branches dudit stator.

2. Moteur pas à pas selon la revendication 1 et dont le rotor présente un axe de rotation (40) passant sensiblement par le milieu de ladite ouverture statorique, **caractérisé en ce que** ledit premier évidement latéral (20a) et ledit deuxième évidement latéral (20b) ont chacun, au moins partiellement, un profil général circulaire dont le centre géométrique est décalé relativement audit axe de rotation selon une direction (42) perpendiculaire à cet axe de rotation dans le plan général dudit stator.

3. Moteur selon la revendication 2 et dont ledit aimant permanent (6) est circulaire, **caractérisé en ce que** la distance (D2) entre ledit axe de rotation (40) et le centre dudit profil général circulaire de chacun des premier et deuxième évidements latéraux est environ égale à 3/4 du rayon (R3) dudit aimant permanent.

4. Moteur selon la revendication 3, **caractérisé en ce que** le rayon (R1) dudit profil général circulaire des deux évidements latéraux a une dimension environ 10 % supérieure au rayon (R3) dudit aimant permanent (6).

5. Moteur selon l'une des revendications 2 à 4, **caractérisé en ce que** deux encoches (36, 38) de positionnement du rotor (4) sont agencées respectivement dans le premier évidement latéral (20a) et dans le deuxième évidement latéral (20b).

6. Moteur selon la revendication 5, **caractérisé en ce que** chacune des deux encoches a un profil circulaire dont le centre géométrique est sensiblement positionné sur ledit profil général circulaire correspondant avec un décalage angulaire d'environ 60°, mesuré depuis le centre géométrique de ce profil général circulaire relativement à ladite direction perpendiculaire (42).

7. Moteur selon l'une des revendications précédentes, **caractérisé en ce que** ladite bobine (24) est préformée avant d'être montée sur une des deux branches (10, 12) dudit stator (2; 32).
